# EUROPEAN PATENT SPECIFICATION

(11) **EP 0 305 139 B1**
(45) Date of publication and mention of the grant of the patent: **19.04.1995**
(21) Application number: 88307783.6
(22) Date of filing: 23.08.1988
(51) Int. Cl.: C08F 2/44, A01N 25/18

(54) **Polymeric compositions**
Polymerische Zusammensetzungen
Compositions polyméres

(30) Priority: 24.08.1987 GB 8719967; 05.08.1988 GB 8818664
(43) Date of publication of application: 01.03.1989
(60) Divisional application: 94108114.3
(73) Proprietor: ALLIED COLLOIDS LIMITED, Bradford, West Yorkshire BD12 0JZ (GB)
(72) Inventor: Chamberlain, Peter, Shipley West Yorkshire (GB); Hawe, Malcolm, Huddersfield West Yorkshire (GB)
(74) Representative: Lawrence, Peter Robin Broughton

(56) References cited:
- FR-A- 1 598 644
- US-A- 3 400 093

## Description

This invention relates to controlled-release compositions comprising an active ingredient releasably contained within polymeric particles, and in particular to such compositions where the active ingredient is a semiochemical and the composition is an agricultural sprayable composition or a storage stable concentrate that can be diluted to form a sprayable composition.

It is well known to try to control the release of an active ingredient from a composition by trapping the active ingredient within polymer particles, so that the active ingredient has to escape from the particles before it can exert its desired activity. There have been numerous proposals in the literature.

Many of the proposals involve forming the polymeric particles and then absorbing the active ingredient into the particles. For instance in JP 58-121212A particles of cross linked sodium polyacrylate are formed and an aqueous emulsion of an active ingredient is then absorbed into the particles. In U.S. 4,269,959 cross linked polymethyl methacrylate beads are formed and active ingredient is absorbed into the beads. In JP 61-5001 an emulsion is formed of very soft polymer particles formed from 2-ethyl hexyl acrylate and other monomers and volatile active ingredient is then absorbed into the particles. In U.S. 4,303,642 an insecticide is absorbed into polymers formed from, for instance, styrene or certain acrylates.

A problem with these absorption methods is that it is difficult to obtain a satisfactory combination of absorption and controlled release. If absorption is easy then release tends to be too fast. If absorption is difficult then release may be non-existent or, if absorption is only at the surface, may be of short duration.

It is also known to incorporate the active ingredient during the formation of the particles. For instance in EP 67533A a film-forming polyacrylate, volatile solvent and particles of the active ingredient are sprayed to form encapsulated polymer particles containing the active ingredient. In U.S. 3,400,093 a solid active ingredient (an insecticide) is stirred into an emulsion of monomer (for instance methyl methacrylate, styrene or certain blends such as methyl methacrylate-ethyl acrylate) and the mixture is then subjected to oil-in-water emulsion polymerisation to form polymer particles containing the solid insecticide. This product is for use as a floor polish. In Journal Pharmaceutical Sciences volume 59 no.5, May 1970 pages 614 to 618, Khanna et al describe that sustained release pharmaceutical compositions can be formed by bead polymerisation or by emulsion polymerisation in the presence of the pharmaceutically active ingredient, and the examples show the use of, inter alia, methyl methacrylate and/or methacrylic acid. In FR1598644 various delivery systems are described for various active ingredients. In Example 15, butyl methacrylate is polymerised in the presence of 15% DDVP insecticide.

The active ingredients that have been proposed for incorporation by these and other methods can vary widely. In many instances the active ingredients are to work by a contact mechanism. For instance they may exert insecticidal activity by contact between the insect and the solid or liquid insecticide. In some instances however they can be volatile and can exert their activity by vapour phase transmission across an atmosphere. For instance many of the disclosures of controlled release compositions mention perfumes as possible active ingredients.

It is particularly important to be able to preselect the permeability of the polymer to the volatile active ingredient, in order to provide for release to occur at a desired and controlled rate. Many of the polymers that are used in the compositions are of a character such that it is difficult or impossible to preselect their permeability to the active ingredient. For example typical polymers are cellulosic, polyurethane or ethylene vinyl acetate polymers. With all such polymers the only practicable ways of changing the permeability is by including an absorbent diluent, such as silica, in the composition (such as in JP 59-139301) or by changing to an entirely different type of polymer. Accordingly each different active ingredient requires the use of an entirely different type of polymer or method, and this is inconvenient.

Another type of controlled release composition comprises capsule particles in which the active ingredient is in the centre of the capsule and is retained by a capsule wall of a polymer, but again the selection of the polymer is subject to the same disadvantages as those discussed above.

A wide variety of controlled release compositions, and polymer systems for use in them, are therefore known but they are all subject to various disadvantages and, in particular, no system is available that can conveniently be adapted, by very minor and easy modifications in the polymer, to be suitable for providing predetermined rates of release for a wide range of very different volatile active ingredients.

The existence of these difficulties is demonstrated by the particular problems that arise when attempts are made to provide controlled release of an agricultural semiochemical. A semiochemical is a communications chemical that will influence the behaviour of a particular species, for instance by attraction or repulsion. The pheromones are semiochemicals. Typically a semiochemical is a sex attractant for a particular species. By volatilising an extremely small amount of it into the atmosphere, that species is attracted to the area where it has been volatilised and can, for instance, be destroyed in that area by treating it with an insecticide. This "lure and kill" technique is of particular value for treating flying insects, especially where the climate is warm (e.g., with an average day temperature between 25 or 30°C and 40°C).

There are some proposals in the literature indicating that it should be possible to provide controlled release pheromone compositions in which the pheromone is within the matrix of polymeric particles. For instance reference is made to EP 67533A, JP 58-121212A, JP 59-136301A and U.S. 4,269,959 as discussed above.

In EP 256549A, pheromone is absorbed into previously formed polymer and so the system suffers from the disadvantages of absorption methods, as discussed above. In GB 2,141,932 a polymer is formed of monomers such as methyl methacrylate and lauryl methacrylate and/or vinyl pyrollidone. The polymer can be made as an emulsion and then dissolved to form a solution in an organic solvent or can be made initially by polymerisation in organic solvent. Pheromone is added to the solution and this is sprayed. The process is unsatisfactory as it releases organic solvent into the atmosphere and pheromone is inevitably lost during the spraying.

Commercial practice has confirmed that it is not conveniently possible to make satisfactory controlled release techniques by any of these methods, since the commercially available, agricultural, semiochemical, controlled-release compositions are all entirely different from these. They all tend to comprise bulk semiochemical trapped within a protective envelope. For instance the semiochemical may be in the central part of a hollow fibre, in which event it may volatilise out of the open end, or it may be trapped within a spherical wall as a small capsule, or between two sheets as a laminate. Examples are in EP 61192A and EP 243007A.

A dispersion of the small capsules can be applied by spraying but the dispersion tends to be unstable. Manufacture and positioning of the hollow fibres and laminates is inconvenient. Thus there is an urgent need to provide an agricultural semiochemical sustained release composition that is much easier to make and to apply in the chosen place of use and that can give a preselected rate of release of the semiochemical.

A controlled release composition according to the invention is either an agricultural sprayable composition or is a storage stable concentrate that can be diluted to form an agricultural sprayable composition. It comprises an oil-in-water emulsion of polymer particles have a particle size at least 90% by weight below 1»m and consisting of a polymer matrix having an active ingredient which is an agricultural semiochemical and which is distributed throughout the matrix in an amount of 0.1 to below 20% by weight based on the weight of polymer matrix plus semiochemical, and the emulsion has been formed by a method comprising oil-in-water emulsion polymerisation of water insoluble monomeric material in which the active ingredient is dissolved, and the total monomeric material includes at least 60% by weight selected from one or more alkyl (meth) acrylates and blends of one or more alkyl (meth) acrylates with one or more styrenes, and 0 to 40% other ethylenically unsaturated monomers, and the water insoluble monomeric material is selected such that the polymer has a Tg value which is between 0 and 120°C and which is such that the semiochemical is released into the atmosphere at a preselected rate and in which the water insoluble material comprises 40 to 100% by weight of hard monomers, 0 to 60% by weight of soft monomers and 0 to 40% other ethylenically unsaturated monomers. Hard and soft monomers are defined below.

Tg is generally below 110°C and usually below 105°C or 100°C. Tg is the glass transition temperature of the polymer. It may be determined by standard methods. Despite all the difficulties in the prior art of providing convenient controlled release semiochemical compositions, the invention can easily provide a sprayable and stable composition that can give convenient prolonged release of a semiochemical even at relatively high ambient temperatures, e.g., up to 40°C. Also, by minor and easy modifications in the polymerisation it is possible to adapt the polymer to give a chosen rate of release according to the ambient temperature of a wide range of active ingredients.

The semiochemical is generally a volatile liquid at 30°C. It may be a pheromone which may be naturally occurring or synthetically manufactured, or it may be some other synthetic compound that acts in a similar manner to pheromones or other semiochemicals. Spiroketal is a suitable semiochemical for use in the invention and is a sex attractant pheromone for the olive fly. Trimedlure is a synthetic semiochemical that can be used in the invention and is a sex attractant for the Mediterranean fruit fly.

Instead of being an attractant, the semiochemical can be a repellant. For instance a semiochemical can be applied to an area to repel insects from approaching that area. Thus it may be applied to plants to protect the plants or it may be applied to, for instance, timber to protect it from wood-boring insects.

Numerous pheromones and pheromone inhibitors that can be used in the invention are known. Many are described in GB 2,141,932A.

Antioxidant and/or light stabiliser may be dissolved into the monomers with the semiochemical or other active ingredient if that ingredient is unstable in light or oxygen.

The composition contains a relatively low amount of the semiochemical, based on the weight of polymeric matrix. Thus the amount is below 20% and is usually below 10% by weight of the polymeric matrix plus semiochemical (or up to 10% based on total composition). It is usually at least 0.1% and preferably at least about 0.5%. Good results are generally achieved with concentrations of from about 0.5 to 4%, often around 2%. These low concentrations are in contrast to the concentrations of contact insecticide in conventional sustained release polymeric, agricultural insecticidal compositions. If attempts are made to formulate a semiochemical, sustained-release, composition containing the typical insecticidal amounts of 30% or above, e.g., 50%, it is usually found that there is very rapid release initially of most of the pheromone or other semiochemical and thus most of it is not properly utilised. It is surprising that, by keeping the concentration low, it is possible to obtain an agriculturally useful rate of release over many days exposure of the composition to the atmosphere. For instance useful release can easily be achieved over a period of above 10 days, and often 20 days or longer.

The polymer is an oil-in-water emulsion polymer of alkyl (meth) acrylate, optionally with a styrene and optionally with other monomers. It is possible in the invention easily to modify the rate of release by changing the monomer blend so as to change the glass transition temperature, Tg. If the rate of release is too fast then the polymer needs to have a higher Tg, whilst if the rate of release is too slow then the polymer needs to have a lower Tg. If the rate of release is satisfactory at one temperature, a slightly higher Tg may be required to provide the same rate of release at a higher temperature.

The invention therefore includes a method of making a controlled release composition comprising determining the desired rate of release of the semiochemical from the polymer particles at a preselected temperature, selecting water insoluble monomeric material which, when polymerised by oil-in-water emulsion polymerisation, will form particles that provide this rate of release and that have Tg between 0 and 130°C and in which the active ingredient is soluble and of which at least 60% by weight is selected from the specified alkyl (meth) acrylates alone or with styrene, and forming the particles by oil-in-water emulsion polymerisation of the water insoluble monomeric material in which the active ingredient is dissolved. Thus, routine experimentation will show the rate of release of any particular semiochemical at any particular temperature and the monomer blend is selected so as to give the desired rate of release of that active ingredient at that temperature. Similarly, for any particular combination of monomers the rate of release varies with Tg and so adjustment of the proportions in the blend to adjust Tg to a preselected value is another convenient way of providing a composition that will have predetermined controlled release characteristics.

The water insoluble monomeric material may consist of a single monomer in which event that monomer must be water insoluble and must be capable of dissolving the semiochemical in the amount that is required in the composition, since the semiochemical must be present in the monomer particles during the polymerisation. Often however a blend of monomers is used in which event the entire blend must be water insoluble and capable of dissolving the semiochemical. The semiochemical should preferably be soluble in the polymer particles, in the sense that it is trapped within them and can diffuse slowly out of them.

By saying that the monomer, or monomer blend, is water insoluble we mean that its solubility in water is so low that it can be polymerised by oil-in-water emulsion polymerisation without serious coagulation of the emulsion particles.

In order that the polymer can be made from readily available monomers that can be easily varied to adjust Tg and the rate of release, it is necessary that the majority, by weight, of the total monomer should be alkyl (meth) acrylate alone or blended with a styrene, and often the entire water insoluble monomeric material is provided by such monomer or monomer blend. However other monomers can be included provided the resultant blend is water insoluble and does dissolve the active ingredient and can be emulsion polymerised to give the desired Tg and release properties.

A particular advantage of the specified monomers is that it is easy to adjust Tg and the rate of release by adjusting the proportions of monomers that give high (above 25°C) Tg homopolymers (referred to below as "hard monomers") and monomers that give low (below 25°C) Tg homopolymers (referred to below as "soft monomers").

The monomeric material is provided by 40 to 100% by weight of one or more hard monomers, 0 to 60% of one or more soft monomers, and 0 to 40% other monomers. Generally all the monomers are ethylenically unsaturated monomers.

The hard monomers are preferably selected from C1-2 and C16-24 alkyl meth acrylates, C14-24 alkyl acrylates and styrenes. Suitable monomers are methyl or ethyl methacrylate, styrene, and methyl or ethyl -substituted styrenes. Methyl methacrylate and styrene are particularly preferred, and best results are generally obtained when methyl methacrylate is used as the only hard monomer.

The soft monomer is generally a C1-12 alkyl acrylate or a C3-14 alkyl methacrylate. C2-10 alkyl acrylates are preferred. If the soft monomer has a very high softening power then the amount that is used should generally be relatively low as otherwise Tg will be too low for most purposes and the rate of release too fast. However when the soft monomer is less effective larger amounts can be used while still maintaining relatively high Tg values. For instance when the soft monomer is a C3-6 alkyl methacrylate suitable amounts are 10 to 60%. Typical monomers of this type are butyl methacrylates, for instance isobutyl methacrylate. When the carbon chain in the alkyl group is longer, especially when the soft monomer is C7-10 alkyl acrylate, the amount of soft monomer should generally be less, usually 2 to 20%. A preferred monomer of this type is 2-ethyl hexyl acrylate.

When the agricultural semiochemical is very volatile at the intended temperature of use, it may be suitable for the polymer to have Tg above 100°C. However for most agricultural semiochemicals under most conditions of use appropriate controlled release can best be achieved if Tg is not more than 100°C. Release is usually too fast if Tg is below 60°C and preferably it is above 75 or 80°C. Thus best results are generally achieved for agricultural semiochemicals when Tg is about 80 to about 95 or 100°C.

Particularly preferred monomer mixtures comprise 2 to 10% 2-ethyl hexyl acrylate or 20% to 50% of a butyl (generally isobutyl) methacrylate, with the balance of the monomers generally consisting essentially of methyl methacrylate or, less preferably, styrene.

It is, however, possible to include in the monomeric material 0 to 40% ethylenically unsaturated monomer other than the hard and soft monomers discussed above. These other monomers may be selected from, for instance, ethylene, acrylonitrile and, preferably, hydroxy alkyl (meth) acrylates and ethylenically unsaturated carboxylic acid monomers such as acrylic acid or methacrylic acid. The amount of hydrophilic monomers such as hydroxy alkyl (meth) acrylates, methacrylic acid or acrylic acid is generally below 10% by weight. For instance the amount of acrylic acid may be from 0.1 to 5% by weight. However larger amounts can be tolerated in some instances, provided the overall blend is water insoluble, and in particular the presence of larger amounts (up to 40%) methacrylic acid as the free acid can be useful for some particular purposes since the resultant polymer can then be solubilised by contact with alkali.

The monomeric material generally does not need to include cross linking agent and so the polymers are usually substantially linear. However they may be cross linked if desired.

When the emulsion is spread on a surface as a coating and is dried, the polymer particles it is generally preferred that they remain as discrete particles. This is generally desirable since it results in the surface area of polymer that is exposed to the atmosphere being substantially predetermined. If the particles were fused into a film the exposed surface area of polymeric material would change and would be dependent on the thickness of the film, and thus the rate of release would change. However in some particular instances it is desirable for the polymer to be held on the surface as a film and this can be achieved by the inclusion of a plasticiser that will cause the particles to merge into one another as a film. The plasticiser may alternatively be termed a coalescing agent. Another way of holding the particles on the surface is by including a binder in the composition.

The formation of the initial oil-in-water emulsion of monomers containing active ingredient may be performed in conventional manner, except that the active ingredient is dissolved in the monomers before, during or after emulsification. Conventional surfactant or surfactant blends may be used to facilitate the formation of the emulsion and to stabilise it. Conventional initiator may be included and the oil-in-water emulsion polymerisation performed in conventional manner. The particles are mainly (at least about 90% by weight) below 1»m, for instance 0.05 to 1»m. Accordingly the emulsion can easily be provided in a very stable form.

The composition typically contains about 30 to 70% by weight polymer particles including semiochemical and 30 to 70% by weight aqueous phase including surfactants, typical proportions being about 50% of each.

The composition can be stored as a stable composition and can be diluted to any desired polymer content, e.g., to a polymer content of 2 to 10% to make a sprayable composition.

The following are some examples. In these, each polymer latex is made by conventional oil-in-water emulsion polymerisation. About two thirds of the water together with emulsifier, sequestrant, monomer and active ingredient are blended in a Silverson emulsifier to form a smooth white emulsion. The remainder of the water, emulsifier and sequestrant is heated to 85°C, and is mixed with the emulsified aqueous monomer phase and with initiator over two hours, while maintaining the temperature at 85°C with agitation, and the temperature is then maintained for a further one hour after which it is cooled to ambient temperature. The resultant emulsion is filtered to remove coarse particles.

### Example 1

Spiroketal is used as the active ingredient in a variety of polymers. Each emulsion is sprayed into an environment held at 35°C and the rate of loss of spiroketal from the polymer particles is measured at various times from 3 to 17 days.

The release rates of Spiroketal from the formulations, each containing 2.0% w/w Spiroketal, were monitored as follows:

Approximately 1ml of the formulation was weighed accurately on to a 9cm diameter filter paper in a shallow petri-dish which was lined with polyethene. The petri-dishes were placed in a ventilated oven at 35°C and were left exposed for predetermined time intervals. The filter papers and polythene liner were then removed and soxhlet extracted for 5 hours using ethyl acetate. The extracts were made up to volume and analysed for Spiroketal content using gas chromatography. Controls were analysed for total Spiroketal content after zero exposure time.

The results for different monomer blends are shown below.

| Test | 1 | 2 | 3 | 4 | 5 | 6 |
|---|---|---|---|---|---|---|
| Monomer wt % | | | | | | |
| Methyl Methacrylate | 95 | 78 | - | 90 | 56 | - |
| 2-Ethyl Hexyl Acrylate | 5 | - | - | 10 | - | - |
| Iso-Butyl Methacrylate | - | 22 | 15 | - | 44 | 38 |
| Styrene | - | - | 85 | - | - | 62 |
| Tg °C | 92 | 92 | 92 | 80 | 80 | 80 |

| Release % | | | | | | |
|---|---|---|---|---|---|---|
| 3 days | 27 | 31 | 40 | 50 | 56 | 88 |
| 10 days | 37 | 45 | 91 | 69 | 87 | 100 |
| 17 days | 47 | - | 93 | 76 | 92 | 100 |

This demonstrates that, for this particular semiochemical, rather similar results are obtained with 5 weight percent 2-ethyl hexyl acrylate or 22 weight percent isobutyl methacrylate copolymerised with methyl methacrylate but that when the methyl methacrylate is changed to styrene faster release may occur even though Tg is unchanged. The same trend exists at higher amounts of the soft monomer and therefore lower Tg values.

### Example 2

1,7-Dioxaspiro (5,5) undecane ('Spiroketal') is the principle component of the sex pheromone of the Olive fly : Dacus oleae. 2% formulations were prepared using methyl methacrylate and 2-ethylhexylacrylate monomers at ratios of 100:0, 95:5 and 90:10 respectively and release rates were tested as in Example 1.

The results, showing the % loss of Spiroketal, are shown below.

| Time (Days) | Polymer Ratio (MMA:2-EHA) | | |
|---|---|---|---|
| | 100:0 | 95:5 | 90:10 |
| 2 | 20 | 22.5 | 43 |
| 5 | 20 | 29 | 57 |
| 10 | 20 | 37.5 | 69 |
| 15 | 20 | 45 | 74 |
| 20 | 20 | 51 | 79 |

For comparison, a 2% emulsion of Spiroketal in water (no polymer present) when subjected to the above conditions gave complete loss of Spiroketal in less than 2 hours.

### Example 3

Trimedlure, the sec-butyl ester of trans-4 (or 5) - chloro - 2 - methylcyclohexanecarboxylic acid, is a synthetic attractant for the male Mediterranean fruit fly, Ceratitis capitata.

Formulations were prepared using methyl methacrylate and 2-ethylhexyl acrylate monomers at ratios of 95:5 and 90:10 respectively.

The release rate of Trimedlure from the two formulations, each containing 5% w/w Trimedlure, were measured by a technique similar to that of example 1. Results showing % loss of Trimedlure, are given below.

| Time (Days) | Polymer Ratio (MMA:2-EHA) | |
|---|---|---|
| | 95:5 (Tg 92°C) | 90:10 (Tg 80°C) |
| 2 | 7.5 | 11 |
| 4 | 13.5 | 19 |
| 6 | 18 | 24.5 |
| 8 | 20.5 | 26.5 |
| 10 | 22.5 | 30 |
| 12 | 23.5 | 31.5 |
| 14 | 24.5 | 32.5 |

For comparison, a 5% w/w emulsion of Trimedlure in water (no polymer), when subjected to test conditions, showed an 80% loss of Trimedlure in 4 hours.

### Example 4

1:1 (Z,E/Z,Z) 7,11-Hexadecadienyl acetate is the sex attractant secreted by the female Pink Bollworm : Pectinophora gossy-piella. This perhomone is well-known to be degraded by oxidants and/or ultra-violet light. Consequently, a UV absorber (Tinuvin 328) and a hindered amine light stabiliser (Tinuvin 770DF) were included in the formulation to give the necessary protection. Formulations were prepared using methylmethacrylate and 2-ethylhexyl-acrylate monomers at ratios of 95:5, and 0:100 respectively.

The release rates of pheromone from the three formulations, each containing 2% w/w pheromone and UV light stabilisiers were monitored with time, both exposed to and shielded from sunlight.

The results, showing % of pheromone remaining, are summarised below:

| Time (days) | Polymer Ratio (MMA:2-EHA) | | | | | |
|---|---|---|---|---|---|---|
| | 95:5 (Tg 92°C) | | 90:10 (Tg 80°C) | | 0:100 (Tg -70°C) | |
| | Exposed to Sunlight | Shielded from Sunlight | Exposed to Sunlight | Shielded from Sunlight | Exposed to Sunlight | Shielded from Sunlight |
| 1 | 80 | 90 | 65 | 78 | 35 | 32 |
| 2 | 62 | 80 | 50 | 64 | 9 | 9 |
| 4 | 36 | 63 | 26 | 47 | | |
| 6 | 21 | 51 | 15 | 33 | | |
| 8 | 14 | 40 | 10 | 24 | | |
| 10 | 9.5 | 30 | 6 | 16 | | |
| 12 | 7.5 | 21 | 4 | 11 | | |
| 14 | 6 | 16 | 2 | 7 | | |
| 16 | - | 10 | - | 4 | | |

For comparison, an emulsion of the same pheromone releases at least 80% within about 4 hours.

## Claims

1. A controlled release composition selected from (a) an agricultural sprayable composition and (b) a storage stable concentrate that can be diluted to form an agricultural sprayable composition, which composition is an oil-in-water emulsion of polymer particles having a particle size of at least 90% by weight below 1»m and consisting of a polymer matrix with active ingredient distributed throughout the matrix and in which the emulsion has been formed by oil-in-water emulsion polymerisation of water insoluble monomeric material in which the active ingredient is dissolved, and the total monomeric material) includes at least 60% by weight selected from one or more alkyl (meth) acrylates and blends of one or more alkyl (meth) acrylates with one or more styrenes, and 0 to 40% ethylenically unsaturated monomers, characterised in that the active ingredient is an agricultural semiochemical that is present in an amount of 0.1 to below 20% by weight based on the weight of polymeric matrix and semiochemical, and the water insoluble monomeric material is selected such that the polymer has a Tg value which is between 0 and 120°C and which is such that the semiochemical is released into the atmosphere at a preselected rate and in which the water insoluble monomeric material comprises 40 to 100% by weight of hard monomers, 0 to 60% by weight of one or more soft monomers, whereby hard monomers provide homopolymers with a Tg above 25°C and soft monomers provide homopolymers with a Tg below 25°C, and 0 to 40% other ethylenically unsaturated monomers.

2. A composition according to claim 1 in which the hard monomers are selected from C1-2 and C16-24 alkyl methacrylates, C14-24 alkyl acrylates and styrene and the soft monomers are selected from C1-12 alkyl acrylates and C3-14 alkyl methacrylates.

3. A composition according to claim 1 or claim 2 in which the water insoluble monomeric material includes one or more soft monomers.

4. A composition according to any of claims 1 to 3 in which the water insoluble monomeric material comprises (a) soft monomer selected from 2 to 20% by weight C7-10 alkyl acrylate and 10 to 60% by weight C3-6 alkyl methacrylate, (b) at least 40% by weight one or more hard monomers selected from C1-2 and C16-24 alkyl methacrylate, C14-24 alkyl acrylates and styrene and (c) 0 to 40% other ethylenically unsaturated monomers.

5. A composition according to any of claims 2 to 4 including a soft monomer selected from 2-ethyl hexyl acrylate and butyl methacrylates.

6. A composition according to any of claims 2 to 5 in which the hard monomer is selected from methyl methacrylate and styrene.

7. A composition according to any preceding claim in which the polymer is formed from 2 to 10% by weight 2-ethyl hexyl acrylate or 20 to 50% by weight butyl methacrylate with the balance consisting essentially of methyl methacrylate.

8. A composition according to any preceding claim in which the polymer particles remain as discrete particles when the composition is spread as a coating and dried.

9. A composition according to any preceding claim in which the polymer has a Tg of 60-105°C.

10. A composition according to any preceding claim in which the polymer has Tg of 80-100°C.

11. A composition according to any preceding claim in which the amount of semiochemical is 0.5 to below 10% by weight based on the weight of polymer matrix and semiochemical.

12. A composition according to any preceding claim in which the amount of semiochemical is 0.5 to 4% by weight based on the weight of polymer matrix and semiochemical.

13. A composition according to any preceding claim in which the semiochemical is a synthetic or natural pheromone.

14. A composition according to any preceding claim in which the semiochemical is a spiroketal or trimedlure.

15. A method of applying a semiochemical ingredient comprising spraying a sprayable composition according to any preceding claim.

## Patentansprüche

1. Zusammensetzung mit gesteuerter Freisetzung, ausgewählt aus (a) einer sprühfähigen landwirtschaftlichen Zusammensetzung und (b) einem lagerstabilen Konzentrat, das unter Bildung einer sprühfähigen landwirtschaftlichen Zusammensetzung verdünnt werden kann, wobei die Zusammensetzung eine Öl-in-Wasser-Emulsion von Polymerteilchen mit einer Teilchengröße von mindestens 90 Gewichts-% unter 1 »m und bestehend aus einer Polymermatrix mit innerhalb der gesamten Matrix verteiltem aktivem Bestandteil ist, und in welcher die Emulsion gebildet wurde durch Öl-in-Wasser-Emulsionspolymerisation von wasserunlöslichem monomerem Material, in dem der aktive Bestandteil gelöst ist, und das gesamte monomere Material mindestens 60 Gewichts-%, die ausgewählt sind aus einem oder mehreren Alkyl(meth)acrylaten und Mischungen von einem oder mehreren Alkyl(meth)acrylaten mit einem oder mehreren Styrolen, und 0 bis 40% ethylenisch ungesättigte Monomere einschließt, dadurch gekennzeichnet, daß der aktive Bestandteil eine landwirtschaftliche Semiochemikalie ist, die in einer Menge von 0,1 bis unter 20 Gewichts-% bezogen auf das Gewicht von polymerer Matrix und Semiochemikalie anwesend ist, und das wasserunlösliche monomere Material so ausgewählt ist, daß das Polymer einen Tg-Wert aufweist, der zwischen 0 und 120°C liegt und derart ist, daß die Semiochemikalie mit einer vorher festgelegten Rate in die Atmosphäre freigesetzt wird, und das wasserunlösliche monomere Material 40 bis 100 Gewichts-% harte Monomere, 0 bis 60 Gewichts-% eines oder mehrerer weicher Monomerer, wobei harte Monomere Homopolymere mit einer Tg oberhalb 25°C bereitstellen und weiche Monomere Homopolymere mit einer Tg unter 25°C bereitstellen, und 0 bis 40% andere ethylenisch ungesättigte Monomere umfaßt.

2. Zusammensetzung nach Anspruch 1, in welcher die harten Monomeren ausgewählt sind aus C1-2- und C16-24-Alkyl methacrylaten, C14-24-Alkylacrylaten und Styrol und die weichen Monomeren ausgewählt sind aus C1-12-Alkylacrylaten und C3-14-Alkylmethacrylaten.

3. Zusammensetzung nach Anspruch 1 oder Anspruch 2, in welcher das wasserunlösliche monomere Material eines oder mehrere weiche Monomere einschließt.

4. Zusammensetzung nach irgendeinem der Ansprüche 1 bis 3, in welcher das wasserunlösliche monomere Material (a) weiches Monomer, das aus 2 bis 20 Gewichts-% C7-10-Alkylacrylat und 10 bis 60 Gewichts-% C3-6-Alkylmethacrylat ausgewählt ist, (b) mindestens 40 Gewichts-% eines oder mehrerer harter Monomerer, die aus C1-2- und C16-24-Alkylmethacrylat, C14-24-Alkylacrylaten und Styrol ausgewählt sind, und (c) 0 bis 40% anderer ethylenisch ungesättigter Monomerer umfaßt.

5. Zusammensetzung nach irgendeinem der Ansprüche 2 bis 4, welche ein weiches Monomer einschließt, das aus 2-Ethylhexylacrylat und Butylmethacrylaten ausgewählt ist.

6. Zusammensetzung nach irgendeinem der Ansprüche 2 bis 5, in welcher das harte Monomer aus Methylmethacrylat und Styrol ausgewählt ist.

7. Zusammensetzung nach irgendeinem der vorangehenden Ansprüche, in welcher das Polymer aus 2 bis 10 Gewichts-% 2-Ethylhexylacrylat oder 20 bis 50 Gewichts-% Butylmethacrylat gebildet ist, wobei der Rest im wesentlichen aus Methylmethacrylat besteht.

8. Zusammensetzung nach irgendeinem vorangehenden Anspruch, in welcher die Polymerteilchen diskrete Teilchen bleiben, wenn die Zusammensetzung als Überzug ausgebreitet und getrocknet wird.

9. Zusammensetzung nach irgendeinem vorangehenden Anspruch, in welcher das Polymer eine Tg von 60 - 105°C aufweist.

10. Zusammensetzung nach irgendeinem vorangehenden Anspruch, in welcher das Polymer eine Tg von 80 - 100°C aufweist.

11. Zusammensetzung nach irgendeinem vorangehenden Anspruch, in welcher die Menge an Semiochemikalie 0,5 bis unter 10 Gewichts-%, bezogen auf das Gewicht von Polymermatrix und Semiochemikalie, beträgt.

12. Zusammensetzung nach irgendeinem vorangehenden Anspruch, in welcher die Menge an Semiochemikalie 0,5 bis 4 Gewichts-%, bezogen auf das Gewicht von Polymermatrix und Semiochemikalie, beträgt.

13. Zusammensetzung nach irgendeinem vorangehenden Anspruch, in welcher die Semiochemikalie ein synthetisches oder natürliches Pheromon ist.

14. Zusammensetzung nach irgendeinem vorangehenden Anspruch, in welcher die Semiochemikalie ein Spiroketal oder Trimedlur ist.

15. Verfahren zur Auftragung eines Semiochemikalien-Bestandteils, umfassend das Versprühen einer sprühfähigen Zusammensetzung nach irgendeinem vorangehenden Anspruch.

## Revendications

1. Composition retard choisie parmi (a) une composition pulvérisable agricole et (b) un concentré stable au stockage qui peut être dilué pour former une composition pulvérisable agricole, composition qui est une émulsion huile-dans-l'eau de particules de polymère ayant pour au moins 90 % en poids une dimension de particules de moins de 1 »m et consistant en une matrice de polymère avec un ingrédient actif distribué dans la matrice et dans laquelle l'émulsion a été formée par polymérisation en émulsion huile-dans-l'eau de matière monomère insoluble dans l'eau dans laquelle est dissous l'ingrédient actif et la matière monomère totale contient au moins 60 % en poids choisis parmi un ou plusieurs (méth)acrylates d'alkyles et les mélanges d'un ou plusieurs (méth)acrylates d'alkyles avec un ou plusieurs styrènes et 0 à 40 % de monomères éthyléniques, caractérisée en ce que l'ingrédient actif est un agent sémiochimique agricole qui est présent en quantité de 0,1 à moins de 20 % en poids, par rapport au poids de la matrice polymère et de l'agent sémiochimique, et la matière monomère insoluble dans l'eau est choisie de telle sorte que le polymère a une Tg comprise entre 0 et 120°C et qui est telle que l'agent sémiochimique est libéré dans l'atmosphère à une vitesse prédéterminée et dans laquelle la matière monomère insoluble dans l'eau comprend 40 à 100 % en poids de monomères durs, 0 à 60 % en poids d'un ou plusieurs monomères mous, les monomères durs donnant des homopolymères ayant une Tg de plus de 25°C et les monomères mous des homopolymères ayant une Tg de moins de 25°C, et 0 à 40 % d'autres monomères éthyléniques.

2. Composition selon la revendication 1, dans laquelle les monomères durs sont choisis parmi les méthacrylates d'alkyles en C₁-C₂ et en C₁₆-C₂₄, les acrylates d'alkyles en C₁₄-C₂₄ et le styrène et les monomères mous sont choisis parmi les acrylates d'alkyles en C₁-C₁₂ et les méthacrylates d'alkyles en C₃-C₁₄.

3. Composition selon la revendication 1 ou 2, dans laquelle la matière monomère insoluble dans l'eau contient un ou plusieurs monomères mous.

4. Composition selon l'une quelconque des revendications 1 à 3, dans laquelle la matière monomère insoluble dans l'eau comprend (a) un monomère mou choisi parmi 2 à 20 % en poids d'acrylate d'alkyle en C₇-C₁₀ et 10 à 60 % en poids de méthacrylate d'alkyle en C₃-C₆, (b) au moins 40 % en poids d'un ou plusieurs monomères durs choisis parmi les méthacrylates d'alkyles en C₁-C₂ et en C₁₆-C₂₄, les acrylates d'alkyles en C₁₄-C₂₄ et le styrène et (c) 0 à 40 % d'autres monomères éthyléniques.

5. Composition selon l'une quelconque des revendications 2 à 4, contenant un monomère mou choisi parmi l'acrylate de 2-éthylhexyle et les méthacrylates de butyles.

6. Composition selon l'une quelconque des revendications 2 à 5, dans laquelle le monomère dur est choisi parmi le méthacrylate de méthyle et le styrène.

7. Composition selon l'une quelconque des revendications précédentes, dans laquelle le polymère est formé à partir de 2 à 10 % en poids d'acrylate de 2-éthylhexyle ou 20 à 50 % en poids de méthacrylate de butyle et le reste consistant essentiellement en méthacrylate de méthyle.

8. Composition selon l'une quelconque des revendications précédentes, dans laquelle les particules de polymère restent en particules discrètes lorsque la composition est étalée en revêtement et séchée.

9. Composition selon l'une quelconque des revendications précédentes, dans laquelle le polymère a une Tg de 60-105°C.

10. Composition selon l'une quelconque des revendications précédentes, dans laquelle le polymère a une Tg de 80-100°C.

11. Composition selon l'une quelconque des revendications précédentes, dans laquelle la quantité d'agent sémiochimique est de 0,5 à moins de 10 % en poids par rapport au poids de la matrice de polymère et de l'agent sémiochimique.

12. Composition selon l'une quelconque des revendications précédentes, dans laquelle la quantité de l'agent sémiochimique est de 0,5 à 4 % en poids par rapport au poids de la matrice de polymère et de l'agent sémiochimique.

13. Composition selon l'une quelconque des revendications précédentes, dans laquelle l'agent sémiochimique est une phéromone synthétique ou naturelle.

14. Composition selon l'une quelconque des revendications précédentes, dans laquelle l'agent sémiochimique est un spirokétal ou le trimedlure.

15. Procédé d'application d'un ingrédient sémiochimique comprenant la pulvérisation d'une composition pulvérisable selon l'une quelconque des revendications précédentes.
